# FASCICULE DE BREVET EUROPEEN

(11) **EP 0 743 966 B1**
(45) Date de publication et mention de la délivrance du brevet: **30.11.2005**
(21) Numéro de dépôt: 95942239.5
(22) Date de dépôt: 11.12.1995
(51) Int. Cl.: C08L 63/00, C03C 25/02

(54) **COMPOSITION D'ENSIMAGE POUR FILS DE VERRE, PROCEDE UTILISANT CETTE COMPOSITION ET PRODUITS RESULTANTS**
SCHLICHTEMITTEL FÜR GLASORGANE, VERWENDUNGSVERFAHREN UND PRODUKTE DARAUS
GLASS YARN SIZING COMPOSITION, METHOD USING SAME, AND RESULTING PRODUCTS

(30) Priorité: 13.12.1994 FR 9414353
(43) Date de publication de la demande: 27.11.1996
(73) Titulaire: VETROTEX FRANCE, 73000 Chambéry (FR)
(72) Inventeur: MOIREAU, Patrick, F-73190 Curienne (FR)
(74) Mandataire: Goldenberg, Virginie Isabelle
(86) Numéro de dépôt international: PCT/FR1995/001640
(87) Numéro de publication internationale: WO 1996/018683

(56) Documents cités:
- EP-A- 0 033 043
- EP-A- 0 243 275
- EP-A- 0 367 661
- EP-A- 0 393 407
- EP-A- 0 570 283
- WO-A-87/05540
- GB-A- 2 274 120
- US-A- 4 042 360
- US-A- 4 099 837
- US-A- 4 156 035
- US-A- 5 363 468
- DATABASE WPI Section Ch, Week 7842 Derwent Publications Ltd., London, GB; AN 78-74930A XP002000453 & JP,A,53 102 953 ( SUMITOMO CHEMICAL KK) , 7 Septembre 1978
- PATENT ABSTRACTS OF JAPAN vol. 14, no. 509 (C-776), 7 Novembre 1990 & JP,A,02 212338 (SUMITOMO ELECTRIC IND LTD), 23 Août 1990,
- DATABASE WPI Section Ch, Week 8539 Derwent Publications Ltd., London, GB; AN 85-239500 XP002000454 & JP,A,60 155 553 ( FURUKAWA ELECTRIC CO) , 15 Août 1985
- PATENT ABSTRACTS OF JAPAN vol. 12, no. 186 (C-500), 31 Mai 1988 & JP,A,62 292656 (NIPPON KAYAKU CO LTD), 19 Décembre 1987,
- DATABASE WPI Section Ch, Week 8411 Derwent Publications Ltd., London, GB; AN 84-065811 XP002000455 & JP,A,59 021 542 ( NITTO ELECTRIC IND KK) , 3 Février 1984
- DATABASE WPI Section Ch, Week 8402 Derwent Publications Ltd., London, GB; AN 84-009257 XP002000456 & JP,A,58 204 847 ( HITACHI CHEMICAL KK) , 29 Novembre 1983

## Description

La présente invention concerne une composition d'ensimage pour fils de verre, cette composition réagissant au rayonnement ultraviolet ou à un faisceau d'électrons. La présente invention concerne également un procédé de production de fils de verre de renforcement utilisant cette composition ainsi que les fils de verre obtenus et les composites réalisés à partir des fils.

Dans la suite du texte, par « polymérisable », « polymériser » et « polymérisation » on entend respectivement « polymérisable et/ou réticulable », « polymériser et/ou réticuler » et « polymérisation et/ou réticulation »... De même, par « sous U.V. ou E.B. » et par « irradiation U.V. ou exposition E.B. », on entend respectivement « sous l'action d'un rayonnement ultraviolet ou d'un faisceau d'électrons » et « irradiation par un rayonnement ultraviolet ou exposition à un faisceau d'électrons ».

La fabrication de fils de verre de renforcement se fait de façon connue à partir de filets de verre fondu s'écoulant des orifices de filières. Ces filets sont étirés sous forme de filaments continus, puis ces filaments sont rassemblés en fils de base, lesquels sont ensuite collectés.

Avant leur rassemblement sous forme de fils, les filaments sont revêtus d'un ensimage par passage sur un organe ensimeur. Ce dépôt est nécessaire à l'obtention des fils et permet leur association avec d'autres matières organiques et/ou inorganiques pour réaliser des composites.

L'ensimage sert en premier lieu de lubrifiant et protège les fils de l'abrasion résultant du frottement à grande vitesse des fils sur divers organes lors du procédé précédemment cité.

L'ensimage peut également assurer, notamment après polymérisation, l'intégrité des fils susmentionnés, c'est-à-dire la liaison des filaments entre eux au sein des fils. Cette intégrité est notamment recherchée dans les applications textiles où les fils sont soumis à de fortes contraintes mécaniques. En effet, si les filaments sont peu solidaires les uns des autres, ils se rompent plus facilement et viennent perturber le fonctionnement des machines textiles. Les fils non intègres sont, de plus, considérés comme difficiles à manipuler.

L'ensimage facilite également le mouillage et/ou l'imprégnation des fils par les matières à renforcer et aide à la création de liaisons entre lesdits fils et lesdites matières. De la qualité de l'adhérence de la matière aux fils et de l'aptitude au mouillage et/ou à l'imprégnation des fils par la matière dépendent notamment les propriétés mécaniques des composites obtenus à partir de ladite matière et desdits fils.

Les compositions d'ensimage utilisées doivent être suffisamment stables, notamment sous filière, et compatibles avec les vitesses d'étirage des filaments devant les traverser (jusqu'à plusieurs dizaines de mètres par seconde). Elles doivent notamment résister au cisaillement induit par le passage des filaments et bien mouiller leur surface auxdites vitesses. Il est également souhaitable que ces compositions présentent, après polymérisation, un taux de conversion maximal (ce taux correspondant au rapport entre le taux de fonctions ayant réagi dans l'ensimage après polymérisation et le taux, dans l'ensimage, de fonctions réactives susceptibles de réagir, avant polymérisation) pour garantir notamment l'obtention de fils de verre de qualité constante (un ensimage présentant un taux de conversion très inférieur au taux théorique attendu étant susceptible d'évoluer dans le temps).

La plupart des ensimages actuellement utilisés sont des ensimages aqueux simples à manipuler, mais devant être déposés en grandes quantités sur les filaments pour être efficaces. L'eau représente généralement 90 % en poids de ces ensimages (pour des raisons de viscosité notamment), ce qui oblige à sécher les fils avant leur utilisation comme renforts, l'eau pouvant nuire à la bonne adhérence entre les fils et les matières à renforcer. Ces séchages sont longs et coûteux, doivent être adaptés aux conditions de fabrication des fils et leur efficacité n'est pas toujours optimale. De plus, lorsqu'ils sont faits sur des enroulements de fils, ils entraînent des risques de migration irrégulière et/ou sélective des composants de l'ensimage au sein des enroulements (les ensimages aqueux ayant déjà tendance à se répartir sur les fils de façon irrégulière du fait de leur nature), et éventuellement des phénomènes de coloration des fils ou de déformation des enroulements. La déformation des enroulements s'observe également, en l'absence de séchage, sur les enroulements à bords droits (stratifils) de fils « fins » (c'est-à-dire présentant un « titre » ou « masse linéique » de 300-600 tex (g/km) ou moins) revêtus d'ensimages aqueux.

Quelques rares brevets décrivent des ensimages non aqueux mais ces ensimages font généralement appel à des solvants organiques délicats à manipuler et pouvant nuire à la santé des personnes se trouvant alentour parce que toxiques, et/ou posent des problèmes de viscosité qu'il convient de résoudre en chauffant ces ensimages ou en rajoutant des agents adéquats.

Le brevet EP-B1 243 275 décrit un ensimage comprenant au moins un oligomère mono ou polyinsaturé et un photoamorceur (du type radicalaire), cet ensimage réagissant aux rayonnements ultraviolets et étant utilisé dans un procédé particulier. Selon ce procédé, l'ensimage est déposé sur les filaments avant leur rassemblement en fils, puis les fils sont soumis à un rayonnement ultraviolet avant d'être bobinés de manière à polymériser l'ensimage et éviter le collage entre elles des spires de chaque enroulement, ce collage rendant le dévidage des fils difficile. Un tel procédé permet d'obtenir des fils intègres et directement manipulables. Cependant, l'ensimage polymérisé empêche le glissement des filaments les uns par rapport aux autres, cette absence de mobilité entraînant l'éclatement, par dégradation mécanique de l'ensimage, des fils lorsqu'ils sont coupés et pouvant poser des problèmes dans les applications textiles où les fils utilisés doivent être à la fois intègres et souples (la souplesse des fils étant liée à la souplesse de l'ensimage et à la quantité d'ensimage déposée). De plus, la perte au feu des fils obtenus est plutôt élevée et le taux de conversion après polymérisation excède difficilement 75 %.

Un autre ensimage (à base d'acrylates, de N vinylpyrrolidone et d'un photoamorceur radicalaire) réagissant aux rayonnements ultraviolets est mentionné dans le brevet EP 570 283 décrivant un procédé dans lequel l'irradiation des fils se fait sur les enroulements de fils pendant l'opération de bobinage. Les fils de verre obtenus présentent de bonnes caractéristiques mécaniques, un taux de conversion satisfaisant du fait du temps d'irradiation plus long et une perte au feu faible, mais leur intégrité n'est pas totalement satisfaisante. Augmenter la quantité d'ensimage déposée sur les fils (donc la perte au feu) pour améliorer l'intégrité apparaît cependant peu économique et pourrait conduire à des fils ensimés présentant une rigidité trop importante.

La présente invention a pour objet une composition d'ensimage améliorée pour fils de verre, cette composition rendant les fils aisément manipulables et leur conférant une souplesse compatible avec leurs traitements ultérieurs, cette composition conférant une bonne intégrité aux fils après polymérisation et à perte au feu faible et présentant un taux de conversion satisfaisant, cette composition protégeant en outre efficacement les fils de l'abrasion, leur conférant la possibilité d'être associés à différentes matières à renforcer en vue de réaliser des pièces composites présentant de bonnes propriétés mécaniques, étant particulièrement stable, notamment sous filière, et étant compatible avec les vitesses d'étirage des filaments.

La présente invention a également pour objet un procédé amélioré de fabrication de fils de verre de renforcement, ainsi que des fils de verre améliorés de manipulation facile et aptes à renforcer efficacement des matières organiques et/ou inorganiques pour la réalisation de composites.

La composition d'ensimage selon l'invention est constituée d'une solution de viscosité inférieure ou égale à 400 cP (0,4 Pa.s) comprenant moins de 5 % en poids de solvant et comprenant au moins un système de base polymérisable sous U.V. ou E.B., ledit système de base comprenant au moins un composant de masse moléculaire inférieure à 750 présentant au moins une fonction réactive époxy et comprenant au moins 60 % en poids d'un ou plusieurs composants de masse moléculaire inférieure à 750 présentant au moins une fonction réactive choisie parmi les fonctions suivantes : époxy, hydroxy, vinyléther, acrylique et méthacrylique.

L'invention concerne aussi un procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils la composition d'ensimage précédemment définie.

L'invention concerne encore des fils revêtus d'un ensimage présentant la composition précédemment définie et/ou obtenus selon le procédé ci-dessus mentionné et les composites obtenus à partir desdits fils.

Par la suite, par « composant(s) "époxy" (respectivement "hydroxy", "vinyléther", "acrylique", "méthacrylique") », on entend « composant (s) présentant au moins une fonction réactive "époxy" (respectivement "hydroxy", "vinyléther", "acrylique", "méthacrylique") ».

Dans la composition selon l'invention, les solvants éventuels sont essentiellement des solvants organiques nécessaires à la mise en solution de certains composés polymérisables. La présence de ces solvants en quantité limitée ne requiert pas de traitements particuliers pour les éliminer ; dans la majeure partie des cas, les ensimages selon l'invention sont, de surcroît, totalement dénués de solvant, c'est-à-dire de composés jouant uniquement un rôle de solvant dans la solution.

Du fait de sa faible viscosité (inférieure ou égale à 400 cP et, de préférence, inférieure ou égale à 200 cP), la composition selon l'invention est compatible avec les conditions d'obtention des fils de verre imposées par le procédé direct, la viscosité de la composition étant choisie en fonction de la vitesse d'étirage (généralement de une à plusieurs dizaines de mètres par seconde) et du diamètre des filaments (entre 3 et 24 micromètres environ) amenés à la traverser. La composition selon l'invention présente également une vitesse de mouillage sur le fil compatible avec la vitesse d'étirage des fils.

Par « système de base polymérisable sous U.V. ou E.B. » selon l'invention, il faut comprendre le ou les composés indispensables à l'ensimage et ayant pour fonction essentielle de participer à la structure de l'ensimage polymérisé, ces composés étant aptes à polymériser sous U.V. ou E.B. Le système de base représente généralement entre 60 et 100 % en poids de la composition d'ensimage selon l'invention et, de préférence, il représente entre 70 et 99 % en poids de ladite composition.

De préférence et en général selon l'invention, le ou les composants de masse moléculaire inférieure à 750 mentionnés dans la définition de l'invention sont de masse moléculaire inférieure à 500. De même, dans la plupart des cas selon l'invention et de façon préférée, ce ou ces composants sont des monomères (mono ou polyfonctionnels comme explicité ultérieurement), mais le système de base peut également comprendre des composants de masse moléculaire inférieure à 750 sous forme d'oligomères ou de polymères à fonctions partiellement polymérisées. Le système de base de la composition selon l'invention peut comprendre de 60 à 100 % en poids d'un ou plusieurs composants de masse moléculaire inférieure à 750 présentant une ou plusieurs fonctions réactives parmi celles précédemment citées.

En plus du ou des composants de masse moléculaire inférieure à 750 précités, le système de base de la composition selon l'invention peut comprendre un ou plusieurs autres composés polymérisables sous U.V. ou E.B., notamment un ou plusieurs composants époxy et/ou hydroxy et/ou vinyléther et/ou acrylique et/ou méthacrylique de masse moléculaire plus élevée.

Selon le mode de réalisation préféré de l'invention permettant d'obtenir des résultats particulièrement satisfaisants, le système de base de la composition définie selon l'invention est uniquement constitué d'un ou plusieurs composants époxy et/ou hydroxy et/ou vinyléther et/ou acrylique et/ou méthacrylique, et/ou est uniquement constitué d'un ou plusieurs composants de masse moléculaire inférieure à 750.

De préférence également et en général selon l'invention, le système de base comprend entre 40 et 100 % en poids et avantageusement entre 60 et 100 % en poids d'un ou plusieurs composants époxy de masse moléculaire inférieure à 750.

Le ou les composants époxy et/ou hydroxy et/ou vinyléther et/ou acrylique et/ou méthacrylique pouvant être utilisés dans le système de base peuvent présenter une (composants monofonctionnels) ou plusieurs fonctions réactives identiques (composants polyfonctionnels) ou différentes parmi les fonctions époxy, hydroxy, vinyléther, acrylique et méthacrylique.

De préférence, dans le système de base, la proportion de composant(s) monofonctionnel(s) est comprise entre 0 et 40 % en poids du système de base, la proportion de composant(s) polyfonctionnel(s) est comprise entre 60 et 100 % en poids du système de base et la proportion de composant(s) comprenant plus de deux fonctions réactives identiques choisies parmi celles précédemment citées est comprise entre 0 et 60 % en poids du système de base (dans le cas notamment où le système de base comprend uniquement des composants époxy cycloaliphatique, la proportion de composants comprenant plus de deux fonctions époxy cycloaliphatiques est préférentiellement nulle).

Les composants époxy du système de base peuvent être notamment un ou plusieurs des composants suivants : alkyl glycidyl éther ou alkyl époxyde à chaîne aliphatique C₄-C₁₆ ; crésyl- ou phényl- ou nonylphényl- ou p-tert-butyl phényl- ou 2-éthylhexyl- etc... glycidyl éther ou époxyde ; limonène époxyde ; cyclohéxène monoxyde (ce dernier étant un époxy cycloaliphatique) ; etc... (les composants précédents étant monofonctionnels) ; 1,4 butanediol- ou néopentylglycol- ou résorcinol- ou cyclohexane diméthanol- ou 1,6 hexanediol- ou dibromonéopentylglycol- etc... diglycidyl éther ou époxyde ; dérivé diépoxydé des bisphénols A ou F ; 3,4-époxycyclohexylméthyl-3,4-époxycyclohexane carboxylate ; bis-(3,4-époxycyclohexyl) adipate (ces deux derniers époxy étant des époxy cycloaliphatiques) ; polyglycol diépoxyde ; diglycidyl ester de l'anhydride hexahydrophtalique ; triméthyloléthane- ou triméthylolpropane- etc... triglycidyléther ; triglycidyl éther d'huile de palme ; tétra (para-glycidoxyphényl) éthane ; polyglycidyl éther d'un polyol aliphatique ; polybutadiène époxydé ; résine époxyphénol novolaque ou époxy crésol novolaque ; etc...

Les éventuels composants hydroxy du système de base sont essentiellement choisis parmi les alcools ou les polyols et peuvent servir en tant que flexibilisants et/ou réticulants (ils augmentent alors le taux de réticulation de l'ensimage) en fonction de leur conformation spatiale et du nombre de leurs groupements réactifs.

Ces composants hydroxy peuvent être un ou plusieurs des composants suivants : caprolactone polyol ou ses dérivés ; polyol dérivé de l'éthylène glycol ou du propylène glycol ; triméthylolpropane éthoxylé ou propoxylé ; pentaérythrytol éthoxylé ou propoxylé ; polyoxypropylène tétrol ; etc...

De préférence, la proportion, dans le système de base, de composant(s) présentant au moins une fonction réactive hydroxy mais ne présentant pas de fonction réactive époxy n'excède pas 40 % et avantageusement 30 % en poids dudit système de base, lesdits composants pouvant notamment ralentir la cinétique de polymérisation de l'ensimage. De préférence également, le taux, dans le système de base, de composant(s) époxy est au moins égal au taux de composant(s) hydroxy ne présentant pas de fonction réactive époxy.

Les éventuels composants vinyléther du système de base peuvent influer sur la souplesse de l'ensimage polymérisé. Ces composants vinyléthers peuvent être un ou plusieurs des composants suivants : hydroxyalkylvinyléther ; monomère ester aliphatique ou aromatique à terminaison éther vinylique, en particulier issu d'acides tels que l'acide adipique ; 1,4 cyclohexane diméthanol monovinyléther ; butanediol monovinyléther ; isobutylvinyléther ; triéthylène glycol monovinyléther ; octadecylvinyléther ; uréthane alkylvinyléther ; uréthane phénylvinyléther etc... (les composants précédents étant monofonctionnels) ; cyclohexane diméthanol- ou triéthylèneglycol- ou diéthylèneglycol- etc... divinyléther ; oligomère uréthane aliphatique ou aromatique à terminaison vinytéther ; etc...

De préférence, la proportion, dans le système de base, de composant(s) vinyléther ne présentant pas de fonction réactive époxy n'excède pas 40 % en poids dudit système de base.

Les éventuels composants acrylique et/ou méthacrylique du système de base peuvent être un ou plusieurs des composants suivants : n-hexyl- ou cyclohexyl- ou octyl- ou isodecyl- ou lauryl- ou stéaryl- ou isobornyl- etc... acrylate ou méthacrylate ; 2 phénoxy éthyl- ou benzyl- etc... acrylate ou méthacrylate ; tétrahydrofurfuryl- ou 2 éthoxyéthyl- ou 2 méthoxyéthyl- ou 2 (2 éthoxy éthoxy) éthyl- ou glycidyl- ou 2 hydroxyéthyl carbamate d'isopropyl- ou 2 hydroxyéthyl carbamate de n-butyl- ou 2 hydroxyéthyl oxazolidone- etc... acrylate ou méthacrylate ; fluoroalkyl acrylate ; etc... (les composants précédents étant monofonctionnels) ; triéthylène glycol- ou éthylène glycol-ou tétraéthylène glycol- ou polyéthylène glycol 200 à 600- ou 1-3 butylène glycol- ou 1-4 butanediol- ou diéthylène glycol- ou 1-6 hexanediol- ou néopentyl glycol- ou bisphénol A éthoxylé- ou diéthylcarbonate- etc... diacrylate ou diméthacrylate ; diol diacrylate ou diméthacrylate à chaîne aliphatique C₁₄-C₁₅, alkoxylé ou non ; tris (2-hydroxy éthyl isocyanurate)- ou pentaérythrytol- ou triméthylolpropane- etc... triacrylate ou triméthacrylate ; pentaérythrytol- ou ditriméthylolpropane- etc... tétraacrylate ou tétraméthacrylate ; dipentaérythrytol- etc... pentaacrylate ou pentaméthacrylate, tétrabromobisphénol A diacrylate ; etc...

Les composants précédemment cités peuvent être classés en deux catégories : les composants dont la polymérisation se fait par voie cationique, c'est-à-dire les composants époxy et/ou hydroxy et/ou vinyléther ; et les composants dont la polymérisation se fait par voie radicalaire, c'est-à-dire notamment les composants acrylique et/ou méthacrylique. De manière générale, les compositions selon l'invention comprenant à la fois des composants polymérisables par voie cationique et des composants polymérisables par voie radicalaire sont plus souples après polymérisation (mais confèrent également une intégrité légèrement plus faible aux fils) que les compositions comprenant uniquement des composants polymérisables par voie cationique. Ces premières compositions sont plus adaptées au revêtement de fils destinés à des applications textiles tandis que ces dernières compositions conviennent principalement au revêtement de fils destinés à être coupés. Avantageusement, selon l'invention, la proportion de composant(s) du système de base pouvant subir une polymérisation par voie radicalaire est inférieure à 60 % en poids du système de base et, de préférence, inférieure à 40 % en poids du système de base.

Selon le mode de réalisation préféré de l'invention, la composition d'ensimage comprend, en plus du système de base, au moins un photoamorceur cationique permettant la polymérisation de l'ensimage par irradiation U.V. ou exposition E.B. Le ou les photoamorceurs cationiques pouvant être utilisés dans la composition d'ensimage selon l'invention peuvent être un ou plusieurs des composants suivants : sel de diazonium tel que l'aryldiazonium tétrafluoroborate ; sel de diaryliodonium tel que le diaryliodonium hexafluoro arseniate ; sel de triarylsulfonium tel que le triarylsulfonium hexafluoroantimoniate ; triarylsulfonium hexafluorophosphate ; triarylsulfonium hexafluoroarseniate ; sel de triarylsélénium ; sel de dialkylphénacylsulfonium ; sel de ferrocénium ; alpha-sulfonyloxy cétone ; silylbenzyl éther etc... et sont, de préférence, des sels de triarylsulfonium. Ces photoamorceurs sont, en général, associés à des composés jouant éventuellement le rôle de solvants, tels que le carbonate de propylène ou le gamma-butyrolactone. De préférence, le taux de photoamorceur(s) cationique(s) présent(s) dans la composition d'ensimage ou apporté(s) à ladite composition pour permettre une bonne polymérisation est compris entre 1 et 5 % en poids de ladite composition.

Sous U.V. ou E.B., le ou les photoamorceurs cationiques libèrent des espèces cationiques induisant la polymérisation du ou des composants époxy et, le cas échéant, du ou des composants hydroxy et/ou vinyléther, et, éventuellement, libèrent des radicaux libres induisant, le cas échéant, la polymérisation du ou des composants acrylique(s) et/ou métacrylique(s).

En plus d'un photoamorceur cationique, la composition d'ensimage selon l'invention peut comprendre, dans le cas particulier où ladite composition comprend au moins un composant polymérisable par voie radicalaire, au moins un photoamorceur radicalaire, notamment quand le photoamorceur cationique utilisé ne libère pas de radicaux libres et/ou quand le taux de composés réagissant par voie radicalaire dépasse environ 40 % en poids du total des composés polymérisables sous U.V. ou E.B., la présence de ce photoamorceur radicalaire n'étant cependant pas indispensable. Le photoamorceur radicalaire peut consister notamment en une ou des cétones aromatiques telles que la 2-hydroxy 2-méthyl 1-phényl propane 1-one, la 1-hydroxy cyclohéxyl phényl cétone, etc... Son taux est proportionnel au taux de composés polymérisables par voie radicalaire présents dans l'ensimage et n'excède pas 8 % en poids de l'ensemble desdits composés.

Outre le système de base et, le cas échéant, le ou les photoamorceurs, la composition d'ensimage selon l'invention peut comprendre des additifs en faible quantité, ces additifs donnant des propriétés particulières à la composition d'ensimage mais ne participant pas de manière essentielle à la structure de l'ensimage, contrairement au système de base. Même si ces additifs sont à distinguer du système de base, ils peuvent être néanmoins polymérisables sous U.V. ou E.B. comme les composés du système de base.

La composition selon l'invention peut notamment comprendre, à titre d'additif(s), au moins un agent de couplage permettant d'accrocher l'ensimage sur le verre, la proportion d'agent(s) de couplage dans l'ensimage étant comprise entre 0 et 15 % en poids de l'ensimage. Ce ou ces agents de couplage présentent de préférence une masse moléculaire inférieure à 500 et ne portent pas de fonctions aminées primaires ou secondaires, lesdites fonctions pouvant notamment neutraliser les espèces cationiques (par exemple les acides de Lewis) libérées par les photoamorceurs cationiques. Les agents de couplage peuvent être un ou plusieurs des composants suivants : gamma-glycidoxypropyltriméthoxysilane ; gamma-méthacryloxypropyltriméthoxysilane ; triméthoxysilane polyéthoxylé-propoxylé ; gamma-acryloxypropyltriméthoxysilane ; vinyle triméthoxysilane ; etc... (les composants précédents étant des silanes) ; titanate ; zirconate ; siloxanne ; etc...

La composition selon l'invention peut également comprendre, à titre d'additif(s), au moins un agent filmogène jouant uniquement un rôle d'agent de glissement et facilitant le fibrage, dans des proportions comprises entre 0 et 15 % en poids et de préférence entre 0 et 10 % en poids. La présence d'agent(s) filmogène(s) empêche un frottement important des filaments sur le dispositif ensimeur lorsque les filaments sont très fins et/ou étirés à grande vitesse (plus de 40 m/s), ces agents étant cependant coûteux et pouvant entraîner une diminution des caractéristiques mécaniques des composites. Ces agents de fibrage peuvent être un ou plusieurs des composants suivants : silicone ; siloxanne fonctionnalisé époxy ou non ; dérivé de silicones tel que l'huile de silicone, polysiloxanne tel que le glycidyl(n)polydiméthyl siloxanne ou l'alpha-oméga acryloxypolydiméthyl siloxanne, etc...

La composition selon l'invention peut également comprendre, à titre d'additif(s), au moins un agent de mise en oeuvre textile jouant essentiellement un rôle de lubrifiant, dans des proportions comprises entre O et 10 % en poids et, de préférence, comprises entre 0 et 5 % en poids. Les agents textiles peuvent être un ou plusieurs des composants suivants : ester gras (éventuellement éthoxylé ou propoxylé) ou dérivé des glycols (notamment de l'éthylène ou du propylène glycol) tels que l'adipate d'éthylène glycol, le palmitate d'isopropyle ou de cétyle, le stéarate d'isobutyle ou d'isopropyle, le laurate de décyle, un polyéthylène glycol ou polypropylène glycol de poids moléculaire inférieur à 2000, etc...

L'ensimage peut également comprendre, à titre d'additif(s), au moins un agent d'adaptation aux matières à renforcer, dans le cas des matières cimentaires notamment.

La composition d'ensimage selon l'invention protège efficacement les fils de l'abrasion, est stable notamment sous filière, compatible avec les vitesses d'étirage des filaments et ne nécessite pas le recours à une opération de séchage. La stabilité de la composition d'ensimage peut être accrue lorsque la composition ne comprend pas de photoamorceur cationique. Aussi peut-il être intéressant d'utiliser la composition selon l'invention ne comprenant pas de photoamorceur cationique et de n'apporter à ladite composition le ou lesdits photoamorceurs que lorsque les fils ensimés sont prêts à être soumis à un rayonnement ultraviolet ou à un faisceau d'électrons visant à polymériser l'ensimage.

Lorsque la composition selon l'invention est déposée sur les filaments en cours d'étirage, elle se répartit très rapidement sur toute leur surface et forme un véritable film de protection pour chacun d'entre eux. Le fil obtenu par rassemblement des filaments et revêtu de la composition non encore polymérisée est ainsi constitué d'un faisceau de filaments gainés qui peuvent glisser les uns sur les autres, ce fil présentant alors une souplesse importante, particulièrement avantageuse dans le cas où ce fil est destiné à être coupé, le gainage des filaments offrant en outre une protection supplémentaire contre l'abrasion.

Un tel fil ne présente pas une intégrité au sens ordinaire du terme, c'est-à-dire qu'il n'est pas constitué de filaments fixés entre eux grâce, notamment, à une liaison par collage provoquée par un ou plusieurs constituants de l'ensimage telle que peuvent la provoquer des agents filmogènes collants présents en quantité importante dans un ensimage. Malgré cela, ce fil revêtu de la composition non encore polymérisée est aisément manipulable et, lorsqu'il est bobiné sous forme d'enroulements, peut facilement être extrait des enroulements sans avoir subi au préalable de traitement de polymérisation de l'ensimage. Les fils revêtus de la composition d'ensimage non encore polymérisée ont par ailleurs une très bonne aptitude au mouillage et à l'imprégnation par des matières à renforcer, l'imprégnation plus rapide permettant un gain de productivité et les composites obtenus présentant un aspect plus homogène et certaines propriétés mécaniques améliorées.

L'intégrité proprement dite des fils par collage des filaments le constituant est obtenue après polymérisation de la composition d'ensimage par irradiation U.V. ou exposition E.B. Cette intégrité est recherchée au niveau des fils devant subir de fortes contraintes mécaniques lors de leur mise en oeuvre (applications textiles) ou au niveau des fils coupés destinés à renforcer des matières organiques et/ou inorganiques ; il est préférable, dans de tels cas, d'effectuer la polymérisation de l'ensimage avant respectivement la mise en oeuvre des fils dans des applications textiles ou l'association des fils coupés avec une matière à renforcer.

L'intégrité obtenue après polymérisation de l'ensimage est importante alors que le taux d'ensimage polymérisé sur les fils est relativement faible (la perte au feu des fils revêtus de la composition d'ensimage et/ou obtenus selon le procédé de l'invention n'excédant pas 3 % en poids). La quantité de composition d'ensimage devant être déposée sur les fils pour être efficace est avantageusement peu importante et permet cependant d'obtenir des fils présentant de très bonnes caractéristiques, dont l'intégrité. Cette intégrité, à perte au feu faible, obtenue en utilisant une composition selon l'invention comprenant au moins un photoamorceur cationique est meilleure que l'intégrité obtenue dans les mêmes conditions en utilisant la plupart des compositions d'ensimage traditionnelles réagissant sous U.V. ou E.B., et notamment en utilisant une composition telle que celle décrite dans le brevet EP 570 283. A titre indicatif, l'intégrité obtenue pour une perte au feu de 1 % avec les compositions d'ensimage selon l'invention comprenant (ou auxquelles a été apporté) au moins un photoamorceur cationique, correspond a une intégrité obtenue pour une perte au feu de 2,5 % avec une composition similaire mais comprenant uniquement des composants réagissant par voie radicalaire et des photoamorceurs radicalaires.

La composition d'ensimage selon l'invention présente également après polymérisation un taux de conversion plus proche du taux théorique attendu que celui obtenu dans les mêmes conditions pour les ensimages traditionnels réagissant sous U.V. ou E.B. En effet, dans les ensimages traditionnels, notamment les ensimages comprenant des composés polymérisables par voie radicalaire et des photoamorceurs radicalaires, l'arrêt de la polymérisation intervient dès la fin de l'irradiation U.V. ou de l'exposition E.B. par consommation des radicaux libres formés. Dans la composition d'ensimage selon l'invention, les acides de Lewis issus de la décomposition du photoamorceur subsistent et permettent la poursuite de la polymérisation. De préférence, les fils ensimés selon l'invention sont soumis à une phase de mûrissement après polymérisation afin d'obtenir un taux de conversion satisfaisant.

Les fils peuvent être associés avantageusement à différentes matières à renforcer en vue de la réalisation de pièces composites présentant de bonnes propriétés mécaniques. La composition selon l'invention confère en effet aux fils une bonne compatibilité avec les matières à renforcer, notamment avec les matières organiques et en particulier avec les matières époxy, mais également avec les matières minérales telles que les matières cimentaires. Elle permet également l'imprégnation des fils ensimés par la matière à renforcer. Cette composition est particulièrement adaptée pour la production de fils continus collectés sous forme de stratifils, de gâteaux, de cops, de mats..., ou pour la production de fils coupés, ces différents fils étant composés de filaments de diamètre pouvant aller de 3 à environ 24 microns. La composition d'ensimage selon l'invention est notamment adaptée à la production de fils fins (de titre allant notamment de 68 à 136 tex) collectés sous forme de stratifils, contrairement aux ensimages aqueux traditionnels.

La composition d'ensimage selon l'invention est déposée avantageusement au cours du procédé selon l'invention sur des filaments destinés à être rassemblés en fils puis est polymérisée sous U.V. ou E.B., l'irradiation U.V. ou l'exposition E.B. pouvant être effectuée à différents stades du procédé. L'irradiation ou l'exposition peut notamment se faire pendant le procédé direct de production des fils après dépôt de l'ensimage sur les filaments et avant collecte des fils ensimés. L'irradiation ou l'exposition peut également se faire pendant la collecte des fils ensimés, de même qu'elle peut se faire après l'opération de collecte, préalablement ou simultanément à la réalisation d'un composite par association des fils ensimés à une matière organique.

De préférence, l'irradiation ou l'exposition se fait en présence d'au moins un photoamorceur cationique, ce photoamorceur se trouvant déjà dans la composition d'ensimage telle que déposée sur les filaments et/ou étant apporté à ladite composition ultérieurement avant irradiation U.V. ou exposition E.B., notamment par l'intermédiaire d'une matière (par exemple un liant ou une matière à renforcer) associée aux fils de verre ensimés.

Dans le cas où la composition d'ensimage déposée sur les filaments selon le procédé de l'invention comprend au moins un photoamorceur cationique, l'irradiation U.V. ou l'exposition E.B. peut se faire au niveau des filaments ensimés ou au niveau des fils ensimés sur une partie de leur trajet avant collecte, sur le modèle des procédés respectivement décrits dans les brevets US 4 042 360 et EP 243 275. Si les fils sont collectés sous forme d'enroulements, l'irradiation U.V. peut également se faire sur les enroulements pendant l'opération de bobinage sur le modèle du procédé décrit dans le brevet EP 570 283. L'irradiation U.V. ou l'exposition E.B. avant collecte des fils et/ou sur des enroulements de fils ensimés est particulièrement préférée dans le cas où les fils sont destinés à des applications textiles.

Les fils obtenus après rassemblement des filaments peuvent non seulement être collectés sous forme d'enroulements sur un support en rotation mais peuvent également être collectés sur des supports récepteurs en translation. Notamment, les fils peuvent être projetés par un organe servant également à les étirer, vers la surface de collecte se déplaçant transversalement à la direction des fils projetés en vue d'obtenir une nappe de fils continus entremêlés appelée « mat », auquel cas l'irradiation U.V. ou l'exposition E.B. peut se faire non seulement avant collecte comme décrit précédemment (l'ensimage déposé sur les filaments comprenant alors au moins un photoamorceur cationique), mais également pendant la collecte, sur les fils répartis sur la surface de collecte. Le cas échéant, un liant (ce liant pouvant, éventuellement, comprendre et apporter à l'ensimage un photoamorceur cationique) peut avoir été projeté sur le mat avant irradiation U.V. ou exposition E.B. et l'irradiation ou l'exposition peut permettre de polymériser à la fois le liant et l'ensimage.

Les fils peuvent également être coupés avant collecte par un organe servant également à les étirer, les fils coupés étant collectés sur des supports récepteurs en translation, auquel cas l'irradiation U.V. ou l'exposition E.B. se fait préférentiellement au niveau des fils coupés (l'ensimage déposé sur les filaments comprenant dans ce cas avantageusement au moins un photoamorceur cationique), par exemple entre l'organe de coupe et le support récepteur et/ou sur le support récepteur et/ou entre un premier support récepteur et un second support récepteur...

Les fils peuvent également être collectés sans avoir été soumis à un rayonnement ultraviolet ou à un faisceau d'électrons, l'irradiation U.V. ou l'exposition E.B. se faisant ultérieurement. Notamment, les fils peuvent être collectés sous forme d'enroulements, puis être extraits desdits enroulements pour subir des traitements supplémentaires (par exemple pour être coupés par un organe servant également à les entraîner mécaniquement), l'irradiation ou l'exposition pouvant se faire sur les fils avant, pendant ou après le ou les traitements supplémentaires (notamment pour la coupe, l'irradiation ou l'exposition peut se faire entre l'organe de coupe et l'organe de collecte des fils coupés ou sur l'organe de collecte...).

Les fils peuvent également être collectés sans avoir été soumis à un rayonnement ultraviolet ou à un faisceau d'électrons, puis être irradiés ou exposés après association avec une matière organique lors de la réalisation d'un composite, ladite matière comprenant, éventuellement, au moins un photoamorceur cationique. Selon la matière organique utilisée, l'irradiation U.V. ou l'exposition E.B. peut s'accompagner d'un traitement thermique ou d'un autre traitement par rayonnement actinique etc...

L'irradiation U.V. ou exposition E.B. peut également se faire après association des fils de verre ensimés et d'une matière organique de la façon suivante : après étirage, les filaments de verre sont enduits de la composition d'ensimage selon l'invention et rassemblés en fils alors que simultanément on extrude et on entraîne une matière organique thermoplastique, les trajets suivis par les fils de verre et la matière organique convergeant l'un vers l'autre avant que ladite matière et lesdits fils ne soient rassemblés en au moins un fil ou ruban composite, ledit fil ou ruban composite étant soumis à un rayonnement ultraviolet ou à un faisceau d'électrons sur une partie de son trajet avant collecte. Ce procédé de fabrication d'un fil ou ruban composite se fait par exemple sur le modèle du procédé décrit dans le brevet EP 0 367 661.

Les fils de verre revêtus de l'ensimage selon l'invention et/ou obtenus selon le procédé de l'invention sont revêtus d'un ensimage non polymérisé, ou d'un ensimage polymérisé après irradiation U.V. ou exposition E.B.

Ces fils sont aisément manipulables et présentent, après polymérisation, des caractéristiques d'intégrité et un taux de conversion de l'ensimage améliorés. De façon surprenante, des propriétés comme la résistance à la traction des fils selon l'invention peuvent être améliorées par une phase de mûrissement (début de vieillissement) des fils.

Les fils de verre ensimés selon l'invention présentent une perte au feu avantageusement inférieure à 3 % et de préférence inférieure à 2 %. La faible quantité d'ensimage déposée sur le fil permet de réduire considérablement les problèmes de collage entre fils, notamment lorsqu'ils sont collectés sous forme d'enroulements, permet également une meilleure ouverture du fil lors de l'imprégnation par une matière à renforcer et est économiquement avantageuse.

Les fils de verre obtenus selon l'invention peuvent se trouver sous différentes formes nécessitant ou non des traitements supplémentaires des fils. Les fils de verre selon l'invention peuvent ainsi se présenter sous forme de fils continus, de fils coupés, peuvent avoir été assemblés sous forme de tresses, de rubans, de mats ou de réseaux, tissés ou non...

Les composites avantageusement obtenus par association de fils de verre selon l'invention et d'au moins une matière organique et/ou inorganique (le taux de verre au sein de ces composites étant généralement compris entre 30 et 70 % en poids) présentent de bonnes propriétés mécaniques comme illustré ci-après dans les exemples.

D'autres avantages et caractéristiques de l'invention apparaîtront à la lumière des exemples suivants donnant, à titre illustratif mais non exhaustif, des compositions d'ensimage selon l'invention et des caractéristiques des fils revêtus de ces compositions ou des caractéristiques des composites comprenant lesdits fils.

### EXEMPLE 1

Des filaments de 9 *µ*m de diamètre obtenus par étirage de filets de verre selon le procédé de l'invention sont revêtus de l'ensimage de composition suivante exprimée en pourcentages pondéraux :

### Composants du-sysième de base de masse moléculaire inférieure à 750 :

- mélange à base de 3,4-époxycyclohexylméthyl-3,4-époxycyclohexane carboxylate ⁽¹⁾ 34,0 %
- mélange à base d'époxyde monofonctionnel⁽²⁾ 31,5 %
- mélange à base d'époxyde difonctionnel cycloaliphatique⁽³⁾ 16,0 %

(1) Commercialisé sous la référence « UVR 6100 » par la société UNION CARBIDE
(2) Commercialisé sous la référence « UVR 6200 » par la société UNION CARBIDE
(3) Commercialisée sous la référence « UVR 6379 » par la société UNION CARBIDE

### Photoamorceur cationique :

- mélange de triarylsulfonium hexafluoroantimoniate (50 %) et de carbonate de propylène (50 %)⁽⁴⁾ 4,0 %

(4) Commercialisé sous la référence « UVI 6974 » par la société UNION CARBIDE

### Additifs :

- agent de couplage gamma-méthacryloxypropyl triméthoxysilane⁽⁵⁾ 10,0 %
- agent textile adipate d'éthylèneglycol⁽⁶⁾ 4,5 %

(5) Commercialisé sous la référence « Silquest A 174 » par la société OSi
(6) Commercialisé sous la référence « Uraplast S 5 672 » par la société D.S.M.

La composition d'ensimage présente une viscosité de 52.10⁻³ Pa.s (52 cP) à 25°C. Les filaments sont rassemblés en fils, lesquels sont bobinés sur des cops et soumis pendant le bobinage à un rayonnement U.V. émis par un tube à vapeur de mercure d'une puissance de 120 watts par centimètre linéaire de tube, chaque couche de fil étant exposée directement au rayonnement pendant environ 1 seconde.

Les fils sont ensuite extraits des cops pour mesurer leur force de rupture en traction dans les conditions définies par la norme ISO 3341. Les résultats sont rapportés dans le tableau comparatif I en annexe donnant également le titre et la perte au feu des fils obtenus.

A partir des fils obtenus, des plaques composites à fils parallèles sont réalisées conformément à la norme NF 57152. La résine renforcée est la résine polyester M 402 commercialisée sous cette référence par la Société CIBA-GEIGY à laquelle on ajoute, pour 100 parts en poids de résine polyester, 20 parts d'un assouplisseur commercialisé sous la référence « F 8010 C » par la société CRAY-VALLEY, 16,5 parts de styrène et 1,5 parts d'un accélérateur commercialisé sous la référence « THM 60 » par la société CIBA-GEIGY.

Les propriétés mécaniques présentées par ces plaques, en flexion et en cisaillement, sont mesurées respectivement selon les normes ISO 178 et ISO 4585. Ces propriétés sont mesurées avant vieillissement et après immersion de ces plaques dans l'eau à 98°C pendant 24 h.

Les résultats obtenus sur 8 à 10 éprouvettes sont rapportés dans le tableau comparatif Il en annexe donnant le taux de verre en poids des plaques réalisées, le type de résine utilisée pour les plaques, la contrainte de rupture en flexion, pour le taux de verre précité et pour un taux de verre ramené à 100%, avant et après vieillissement, et la contrainte de rupture en cisaillement avant et après vieillissement. Les écarts types sont indiqués entre parenthèses.

### EXEMPLE 2

A partir des fils obtenus dans l'exemple 1, des plaques composites sont réalisées comme dans l'exemple 1. la résine renforcée étant cette fois la résine époxy CY 205 commercialisée sous cette référence par la société CIBA-GEIGY, à laquelle on ajoute, pour 100 parts en poids de résine époxy, 32 parts en poids d'un durcisseur commercialisé sous la référence « HT 972 » par la société CIBA-GEIGY.

Les propriétés mécaniques des plaques obtenues sont mesurées comme décrit dans l'exemple 1, avant vieillissement et après immersion des plaques dans l'eau à 98°C pendant cette fois 72 heures et sont rapportées dans le tableau comparatif II en annexe.

### EXEMPLE 3

Des filaments obtenus selon l'invention sont revêtus de l'ensimage de composition suivante (pourcentages pondéraux) :

### Composants du système de base de masse moléculaire inférieure à 750 :

- triméthylol propane triglycidyl éther⁽⁷⁾ 35,0 %
- crésylglycidyl éther⁽⁸⁾ 26,0 %
- 3,4-époxycyclohexylméthyl-3,4-époxycyclohexane carboxylate⁽⁹⁾ 15,0 %

(7) Commercialisé sous la référence « Heloxy 5048 » par la société SHELL
(8) Commercialisé sous la référence « Heloxy 62 » par la société SHELL
(9) Commercialisée sous la référence « UVR 6110 » par la société UNION CARBIDE

### Photoamorceur cationique :

- mélange de triarylsulfonium hexafluoroantimoniate (50 %) et de carbonate de propylène (50 %)⁽⁴⁾ 4,0 %

(4) Commercialisé sous la référence « UVI 6974 » par la société UNION CARBIDE

### Additifs :

- agent de couplage gamma(dialkoxyphényl) propyltriméthoxysilane⁽¹⁰⁾ 10,0 %
- agent filmogène α, ω-glycidoxy-alkylpolydiméthylsiloxane⁽¹¹⁾ 10,0 %

(10) Commercialisé sous la référence « Silquest A 11648 » par la société OSi
(11) Commercialisé sous la référence « Tégo SI 2130 » par la société GOLDSCHMIDT

La composition d'ensimage en question présente une viscosité de 64.10⁻³ Pa.s (64 cP) à 20°C. Les filaments sont rassemblés en fils, lesquels fils sont ensuite coupés par un organe servant à les étirer, les fils étant collectés sur un convoyeur en mouvement et soumis sur ledit convoyeur à un rayonnement ultraviolet émis par un tube à vapeur de mercure d'une puissance de 80 watts par centimètre linéaire de tube, le temps d'exposition de chacun des fils coupés étant de l'ordre de 5 secondes.

Le diamètre filamentaire des fils obtenus est de 14 µm et leur perte au feu est de 2 % en poids.

### EXEMPLE 4

Des fils ensimés et irradiés sont obtenus de la même façon que dans l'exemple 1, la composition d'ensimage utilisée étant cependant la suivante (en pourcentages pondéraux) :

### Composants du système de base de masse moléculaire inférieure à 750:

- 1,2 époxyhexadécane⁽¹²⁾ 20,0 %
- triméthylolpropane triglycidyléther⁽⁷⁾ 25,0 %
- 3,4-époxycyclohexylméthyl-3,4-époxycyclohexanecarboxylate⁽⁹⁾ 18,0 %
- 1,4-cyclohexane diméthanol divinyléther ⁽¹³⁾ 20,0 %

(12) Commercialisé sous la référence « UVR 6216 » par la société UNION CARBIDE
(13) Commercialisé sous la référence « C.H.V.E... » par la société INTERNATIONAL SPECIALITY PRODUCTS

### Photoamorceur cationique

- mélange de triarylsulfonium hexafluoroantimoniate (50 %) et de carbonate de propylène (50 %)⁽⁴⁾ 4,0 %

### Additif

- agent de couplage gamma-méthacryloxypropyltriméthoxysilane⁽⁵⁾ 8,0 %
- agent textile stéarate d'isobutyle 5,0 %

(5) Commercialisé sous la référence « Silquest A 174 » par la société OSi

La composition d'ensimage présente une viscosité de 40.10⁻³ Pa.s (40 cP) à 25°C.

Les caractéristiques des fils obtenus sont déterminées comme dans l'exemple 1 et rapportées dans le tableau comparatif 1.

### EXEMPLE 5

Des fils ensimés et irradiés sont obtenus comme dans l'exemple 1, les fils étant cependant bobinés pendant 1800 secondes sur des supports de façon à donner des enroulements appelés « gâteaux » et la composition d'ensimage utilisée étant cependant la suivante (pourcentages pondéraux) :

### Composants du système de base de masse moléculaire inférieure à 750 :

- 1,2-époxyhexadécane⁽¹²⁾ 13,0 %
- mélange à base d'époxyde difonctionnel cycloaliphatique⁽³⁾ 20,0 %
- triéthylène glycol divinyl éther⁽¹⁵⁾ 30,0 %

(12) Commercialisé sous la référence « UVR 6216 » par la société UNION CARBIDE
(3) Commercialisée sous la référence « UVR 6379 » par la société UNION CARBIDE
(15) Commercialisé sous la référence « D.V.E. 3 » par la société INTERNATIONAL SPECIALITY PRODUCTS

### Composant du système de base de masse moléculaire supérieure à 750 :

- polyglycidyl éther d'huile de palme⁽¹⁴⁾ 20,0 %

(14) Commercialisé sous la référence « Heloxy 505 » par la société SHELL

### Photoamorceur cationique :

- mélange de triarylsulfonium hexafluoroantimoniate (50 %) et de carbonate de propylène (50 %)⁽⁴⁾ 4,0 %

(4) Commercialisé sous la référence « UVI 6974 » par la société UNION CARBIDE

### Additifs :

- agent de couplage gamma-méthacryloxypropyltriméthoxysilane⁽⁵⁾ 8,0 %
- agent textile adipate d'éthylène glycol⁽⁶⁾ 5,0 %

(6) Commercialisé sous la référence « Uraplast S 5 672 » par la société D.S.M.

La composition d'ensimage en question présente une viscosité de 48.10⁻³ Pa.s (48 cP) à 22°C. Les caractéristiques des fils obtenus sont déterminées comme dans l'exemple 1 et rapportées dans le tableau comparatif I.

Des plaques composites sont réalisées de la même façon que dans l'exemple 2 et les propriétés mécaniques de ces plaques mesurées comme dans l'exemple 2 sont rapportées dans le tableau comparatif II en annexe.

### EXEMPLE 6

Des fils ensimés et irradiés sont obtenus comme dans l'exemple 1, les fils étant cependant bobinés pendant 1200 secondes sur des gâteaux et la composition d'ensimage étant cependant la suivante (en pourcentages pondéraux) :

### Composants du système de base de masse moléculaire inférieure à 750 :

- triméthylol propane triglycidyl éther⁽⁷⁾ 20,0 %
- 3,4-époxycyctohéxylméthyl-3,4-époxycyclohexanecarboxylate⁽⁹⁾ 25,0 %
- 1,2-époxyhexadécane ⁽¹²⁾ 16,0 %
- 1,6 hexanediol diacrylate⁽¹⁶⁾ 25,0 %

(7) Commercialisé sous la référence « Heloxy 5048 » par la société SHELL
(9) Commercialisée sous la référence « UVR 6110 » par la société UNION CARBIDE
(12) Commercialisé sous la référence « UVR 6216 » par la société UNION CARBIDE
(16) Commercialisé sous la référence « H.C.D.A. » par la société UNION CHIMIQUE BELGE

### Photoamorceur cationique :

- mélange de triarylsulfonium hexafluoroantimoniate (50 %) et de carbonate de propylène (50 %)⁽⁴⁾ 4,0 %

(4) Commercialisé sous la référence « UVI 6974 » par la société UNION CARBIDE

### Additif :

- agent de couplage triméthoxysilane polyéthoxylé⁽¹⁷⁾ 10 %

(17) Commercialisé sous la référence « Silquest A 1230 » par la société OSi

La composition d'ensimage présente une viscosité de 52.10⁻³ Pa.s (52 cP) à 20°C. Les caractéristiques des fils obtenus sont déterminées comme dans l'exemple 1 et rapportées dans le tableau comparatif I.

A partir des fils obtenus, des plaques composites sont réalisées de la même façon que dans l'exemple 1 et les propriétés mécaniques de ces plaques mesurées comme dans l'exemple 1 sont rapportées dans le tableau comparatif II.

### EXEMPLE 7

A partir des fils obtenus dans l'exemple 6, des plaques composites sont réalisées comme dans l'exemple 2 et les propriétés mécaniques de ces plaques mesurées dans les mêmes conditions que dans l'exemple 2 sont rapportées dans le tableau comparatif II.

### EXEMPLE 8

Des fils ensimés et irradiés sont obtenus comme dans l'exemple 1, la composition d'ensimage étant cependant la suivante (pourcentages pondéraux) :

### Composants du système de base de masse moléculaire inférieure à 750 :

- triméthylol propane triglycidyl éther⁽⁷⁾ 20,0 %
- 3,4-époxycyclohexylméthyl-3,4-époxycyclohéxanecarboxylate⁽⁹⁾ 20,0 %
- triéthylène glycol divinyl éther⁽¹⁵⁾ 15,0 %
- lauryl acrylate⁽¹⁸⁾ 13,0 %
- N vinyl pyrrolidone 15,0%

(15) Commercialisé sous la référence « D.V.E. 3 » par la société INTERNATIONAL SPECIALITY PRODUCTS
(18) Commercialisé sous la référence « SR 335 » par la société CRAY-VALLEY

### Photoamorceur cationique :

- mélange de triarylsulfonium hexafluoroantimoniate (50 %) et de carbonate de propylène (50 %)⁽⁴⁾ 4,0 %.

(4) Commercialisé sous la référence « UVI 6974 » par la société UNION CARBIDE

### Additifs :

- agent de couplage triméthoxysilane polyéthoxylé⁽¹⁷⁾ 8,0 %
- agent textile adipate d'éthylène glycol⁽⁶⁾ 5,0 %

(17) Commercialisé sous la référence « Silquest A 1230 » par la société OSi
(6) Commercialisé sous la référence « Uraplast S 5 672 » par la société D.S.M.

La composition d'ensimage présente une viscosité de 44.10⁻³ Pa.s (44 cP) à 25°C. Les caractéristiques des fils obtenus sont déterminées comme dans l'exemple 1 et rapportées dans le tableau comparatif I.

A partir des fils obtenus, des plaques composites sont réalisées comme dans l'exemple 1 et les propriétés mécaniques de ces plaques mesurées comme dans l'exemple 1 sont rapportées dans le tableau comparatif II.

### EXEMPLE 9

A partir des fils obtenus dans l'exemple 8, des plaques composites sont réalisées comme dans l'exemple 2 et les propriétés mécaniques de ces plaques mesurées dans les mêmes conditions que dans l'exemple 2 sont rapportées dans le tableau comparatif II.

### EXEMPLE COMPARATIF I

Des fils ensimés et irradiés sont obtenus comme dans l'exemple 1, la composition d'ensimage étant cependant la suivante (pourcentages pondéraux) :
- phénoxy acrylate⁽¹⁹⁾ 20,0 %
- ester acrylate⁽²⁰⁾ 20,0 %
- triméthylolpropane triacrylate triéthoxylé⁽²¹⁾ 14,0 %
- silicone hexaacrylatel⁽²²⁾ 7,5 %
- N vinyl pyrrolidone 20,0 %
- photoamorceur radicalaire 1-hydroxy cyclohexylphenylcétone⁽²³⁾ 10,0 %
- agent de couplage gamma-aminopropyltriéthoxysilane⁽²⁴⁾ 6,0 %
- agent textile adipate d'éthylène glycol⁽⁶⁾ 2,5 %

(19) Commercialisé sous la référence « SR 339 » par la société CRAY-VALLEY
(20) Commercialisé sous la référence « SR 491 » par la société CRAY-VALLEY
(21) Commercialisé sous la référence « SR 454 » par la société CRAY-VALLEY
(22) Commercialisé sous la référence « Ebecryl 1360 » par la société UNION CHIMIQUE BELGE
(23) Commercialisé sous la référence « Irgacure 184 » par la société CIBA-GEIGY
(24) Commercialisé sous la référence « Silquest A 1100 » par la société OSi

La composition d'ensimage présente une viscosité de 60.10⁻³ Pa.s (60 cP) à 20°C. Les caractéristiques des fils obtenus sont déterminées comme dans l'exemple 1 et rapportées dans le tableau comparatif I.

A partir des fils obtenus, des plaques composites sont réalisées comme dans l'exemple 2 et les propriétés mécaniques de ces plaques mesurées comme dans l'exemple 2 sont rapportées dans le tableau comparatif II.

### EXEMPLE COMPARATIF II

Des fils ensimés et soumis à un rayonnement ultraviolet sont obtenus de la même façon que dans l'exemple 6, la composition d'ensimage utilisée étant cependant la suivante (en pourcentages pondéraux) :
- carbonate diacrylate⁽²⁵⁾ 14,5%
- triméthylol propane triacrylate triéthoxylé⁽²¹⁾ 19,0 %
- silicone hexaacrylatel⁽²²⁾ 14,5 %
- N vinyl pyrrolidone 33,0 %
- photoamorceur radiculaire 1-hydroxycyclohexylphénylcétone⁽²³⁾ 9, 5 %
- agent de couplage triméthoxysilane polyéthoxylé⁽¹⁷⁾ 5,0 %
- agent textile adipate d'éthylène glycol⁽⁶⁾ 4,5 %

(25) Commercialisé sous la référence « CL 993 » par la société AKCROS
(21) Commercialisé sous la référence « SR 454 » par la société CRAY-VALLEY
(22) Commercialisé sous la référence « Ebecryl 1360 » par la société UNION CHIMIQUE BELGE
(23) Commercialisé sous la référence « Irgacure 184 » par la société CIBA-GEIGY
(17) Commercialisé sous la référence « Silquest A 1230 » par la société OSi
(6) Commercialisé sous la référence « Uraplast S 5 672 » par la société D.S.M.

La composition d'ensimage présente une viscosité de 40.10⁻³ Pa.s (40 cP) à 20°C. Les caractéristiques des fils obtenus sont déterminées comme dans l'exemple 1 et rapportées dans le tableau comparatif I.

A partir des fils obtenus, des plaques composites sont réalisées comme dans l'exemple 2 et les propriétés mécaniques de ces plaques mesurées comme dans l'exemple 2 sont rapportées dans le tableau comparatif II.

On observe dans les différents exemples précédents que les fils revêtus d'ensimage selon l'invention sont aisément manipulables, présentent une faible perte au feu, et présentent de bonnes propriétés de résistance à la traction. De façon remarquable et avantageuse, les propriétés de résistance à la traction des fils revêtus d'ensimage selon l'invention sont améliorées après un début de vieillissement dans l'eau.

Les fils ensimés selon l'invention permettent d'obtenir des composites présentant des propriétés mécaniques au moins aussi bonnes, voire meilleures, que celles des composites obtenus à partir de fils revêtus d'ensimages comprenant uniquement des composants réagissant par voie radicalaire et des photoamorceurs radicalaires.

Les fils de verre selon l'invention peuvent servir à diverses applications, par exemple à des applications textiles telles que la fabrication de chaînes par ourdissage, ou directement à des applications de renforcement telles que le renforcement de matières organiques (par exemple des matières plastiques) ou inorganiques (par exemple des matières cimentaires) pour obtenir des produits composites.

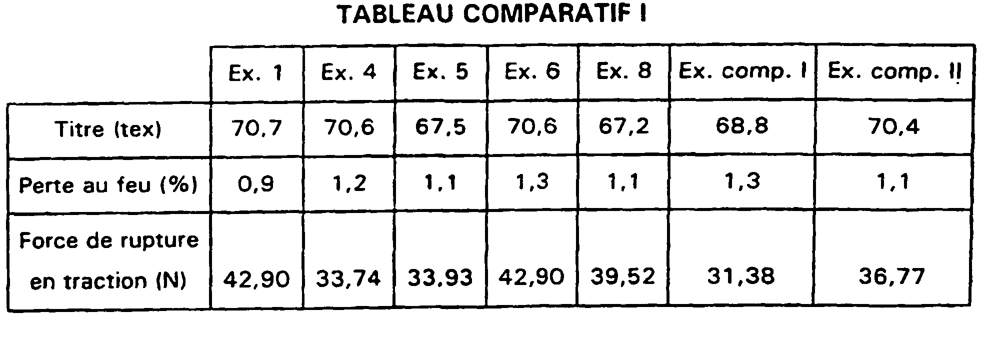

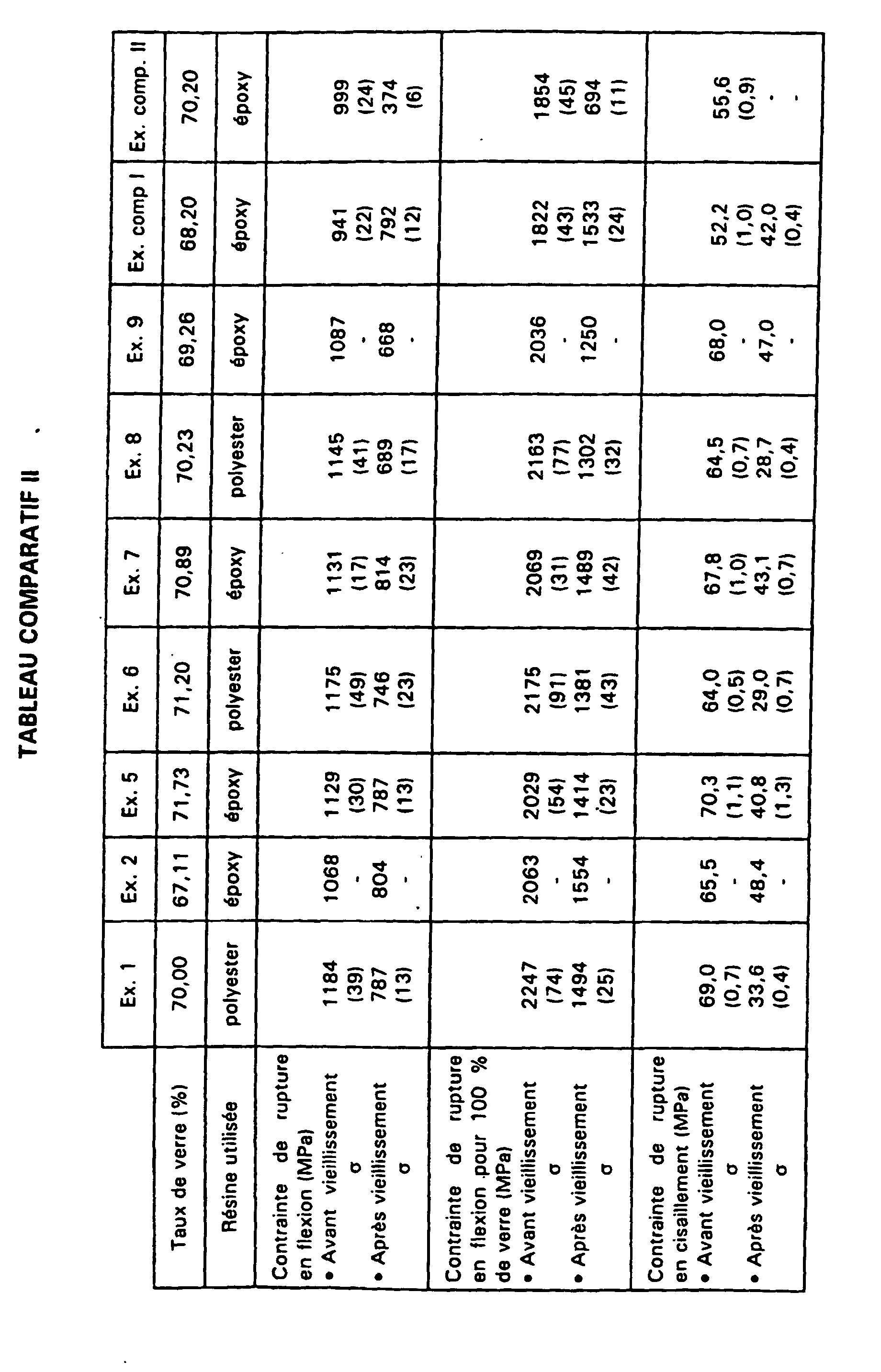

## Revendications

1. Fil de verre revêtu d'une composition d'ensimage constituée d'une solution de viscosité inférieure ou égale à 400 cP comprenant moins de 5 % en poids de solvant et comprenant au moins un système de base polymérisable et/ou réticulable sous l'action d'un rayonnement ultraviolet ou d'un faisceau d'électrons, ledit système de base comprenant au moins un composant de masse moléculaire inférieure à 750 présentant au moins une fonction réactive époxy et comprenant au moins 60 % en poids d'un ou plusieurs composants de masse moléculaire inférieure à 750 présentant au moins une fonction réactive choisie parmi les fonctions suivantes : époxy, hydroxy, vinyléther, acrylique et méthacrylique.

2. Fil de verre selon la revendication 1, **caractérisé en ce qu'**il présente une perte au feu inférieure à 3 % en poids.

3. Fil de verre selon l'une des revendications 1 ou 2, **caractérisé en ce que** le système de base est uniquement constitué d'un ou plusieurs composants présentant au moins une fonction réactive époxy et/ou hydroxy et/ou vinyléther et/ou acrylique et/ou méthacrylique.

4. Fil de verre selon l'une des revendications 1 à 3, **caractérisé en ce que** le système de base comprend entre 0 et 40 % en poids de composant(s) monofonctionnel(s), entre 60 et 100 % en poids dé composant(s) poly-fonctionnel(s) et entre 0 et 60 % en poids de composant(s) présentant plus de deux fonctions réactives identiques.

5. Fil de verre selon l'une des revendications 1 à 4, **caractérisé en ce que** le système de base est uniquement constitué d'un ou plusieurs composants de masse moléculaire inférieure à 750.

6. Fil de verre selon l'une des revendications 1 à 5, **caractérisé en ce que** la composition comprend en outre au moins un agent de couplage dans des proportions comprises entre O et 15 % en poids.

7. Fil de verre selon l'une des revendications 1 à 6, **caractérisé en ce que** la composition comprend en outre au moins un agent filmogène dans des proportions comprises entre 0 et 15 % en poids.

8. Fil de verre selon l'une des revendications 1 à 7, **caractérisé en ce que** la composition comprend en outre au moins un agent textile dans des proportions comprises entre O et 10 % en poids.

9. Fil de verre selon l'une des revendications 1 à 8, **caractérisé en ce que** la composition comprend, en outre, au moins un photoamorceur cationique.

10. Fil de verre selon la revendication 9, **caractérisé en ce que** la composition comprend en outre au moins un photoamorceur radicalaire.

11. Composition d'ensimage pour fils de verre constituée d'une solution de viscosité inférieure ou égale à 400 cP comprenant moins de 5 % en poids de solvant et comprenant au moins un système de base polymérisable et/ou réticulable sous l'action d'un rayonnement ultraviolet ou d'un faisceau d'électrons, ledit système de base comprenant au moins un composant de masse moléculaire inférieure à 750 présentant au moins une fonction réactive époxy et comprenant au moins 60 % en poids d'un ou plusieurs composants de masse moléculaire inférieure à 750 présentant au moins une fonction réactive choisie parmi les fonctions suivantes : époxy, hydroxy, vinyléther, acrylique et méthacrylique.

12. Procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils une composition d'ensimage selon la revendication 11.

13. Procédé selon la revendication 12, **caractérisé en ce que** les fils sont collectés sous forme d'enroulements sur un support en rotation.

14. Procédé selon la revendication 12, **caractérisé en ce que** les fils ensimés obtenus après rassemblement des filaments sont projetés par un organe servant également à les étirer vers une surface de collecte se déplaçant transversalement à la direction des fils projetés en vue d'obtenir une nappe de fils continus entremêlés.

15. Procédé selon la revendication 12, **caractérisé en ce que** les fils ensimés obtenus après rassemblement des filaments sont coupés avant collecte par un organe servant également à les étirer.

16. Procédé selon l'une des revendications 12 à 15, **caractérisé en ce que** la composition d'ensimage est soumise à l'action d'un rayonnement ultraviolet ou d'un faisceau d'électrons en présence d'au moins un photoamorceur cationique après dépôt de ladite composition sur les filaments.

17. Procédé selon la revendication 16, **caractérisé en ce que** les fils ensimés collectés sont mis en contact avec une matière organique à renforcer avant soumission de l'ensemble à un rayonnement ultraviolet ou à un faisceau d'électrons de façon à obtenir un composite.

18. Composite comprenant au moins une matière organique et/ou inorganique et des fils de verre ensimés, **caractérisé en ce qu'**il comprend au moins en partie des fils de verre ensimés selon l'une des revendications 1 à 10.

## Patentansprüche

1. Glasfaden, der mit einer Schlichtezusammensetzung überzogen ist, die aus einer Lösung mit einer Viskosität von unter oder gleich 400 cP besteht, die weniger als 5 Gew.-% Lösungsmittel und mindestens ein Basissystem umfasst, das unter der Einwirkung einer Ultraviolettstrahlung oder eines Elektronenstrahls polymerisierbar und/oder vernetzbar ist und wenigstens eine Komponente mit einer Molmasse von unter 750, die mindestens eine reaktive Epoxyfunktion aufweist, und mindestens 60 Gew.-% einer oder mehrerer Komponenten mit einer Molmasse von unter 750, die mindestens eine reaktive Funktion aufweist/aufweisen, die aus der Epoxy-, Hydroxy-, Vinylether-, Acryl- und Methacrylfunktion ausgewählt ist, umfasst.

2. Glasfaden nach Anspruch 1, **dadurch gekennzeichnet, dass** er einen Glühverlust von weniger als 3 Gew.-% aufweist.

3. Glasfaden nach Anspruch 1 oder 2, **dadurch gekennzeichnet, dass** das Basissystem ausschließlich aus einer oder mehreren Komponenten besteht, die mindestens eine reaktive Epoxy- und/oder Hydroxy- und/oder Vinylether- und/oder Acryl- und/oder Methacrylfunktion aufweisen.

4. Glasfaden nach einem der Ansprüche 1 bis 3, **dadurch gekennzeichnet, dass** das Basissystem zwischen 0 und 40 Gew.-% monofunktionelle Komponente(n), zwischen 60 und 100 Gew.-% polyfunktionelle Komponente(n) und zwischen 0 und 60 Gew.-% einer oder mehrerer Komponenten, die mehr als zwei identische reaktive Funktionen aufweisen, umfasst.

5. Glasfaden nach einem der Ansprüche 1 bis 4, **dadurch gekennzeichnet, dass** das Basissystem ausschließlich aus einer oder mehreren Komponenten mit einer Molmasse von unter 750 besteht.

6. Glasfaden nach einem der Ansprüche 1 bis 5, **dadurch gekennzeichnet, dass** die Zusammensetzung außerdem mindestens einen Haftvermittler mit einem Anteil von zwischen 0 und 15 Gew.-% umfasst.

7. Glasfaden nach einem der Ansprüche 1 bis 6, **dadurch gekennzeichnet, dass** die Zusammensetzung weiterhin mindestens ein filmbildendes Mittel mit einem Anteil von zwischen 0 und 15 Gew.-% umfasst.

8. Glasfaden nach einem der Ansprüche 1 bis 7, **dadurch gekennzeichnet, dass** die Zusammensetzung darüber hinaus mindestens ein Textilhilfsmittel mit einem Anteil von zwischen 0 und 10 Gew.-% umfasst.

9. Glasfaden nach einem der Ansprüche 1 bis 8, **dadurch gekennzeichnet, dass** die Zusammensetzung ferner mindestens einen kationischen Photoinitiator umfasst.

10. Glasfaden nach Anspruch 9, **dadurch gekennzeichnet, dass** die Zusammensetzung des Weiteren mindestens einen radikalischen Photoinitiator umfasst.

11. Schlichtezusammensetzung für Glasfäden, die aus einer Lösung mit einer Viskosität von unter oder gleich 400 cP besteht, die weniger als 5 Gew.-% Lösungsmittel und mindestens ein Basissystem umfasst, das unter der Einwirkung einer Ultraviolettstrahlung oder eines Elektronenstrahls polymerisierbar und/oder vernetzbar ist und wenigstens eine Komponente mit einer Molmasse von unter 750, die mindestens eine reaktive Epoxyfunktion aufweist, und mindestens 60 Gew.-% einer oder mehrerer Komponenten mit einer Molmasse von unter 750, die mindestens eine reaktive Funktion aufweist/aufweisen, die aus der Epoxy-, Hydroxy-, Vinylether-, Acryl- und Methacrylfunktion ausgewählt ist, umfasst.

12. Verfahren zur Herstellung von mit Schlichte überzogenen Glasfäden, gemäß welchem eine Vielzahl von Glasstrahlen, die aus einer Vielzahl von Öffnungen fließen, die im Boden einer oder mehrerer Spinndüsen angeordnet sind, zur Form einer oder mehrerer Bahnen aus endlosen Filamenten gezogen wird und anschließend die Filamente zu einem oder mehreren Fäden vereinigt werden, die auf einem sich bewegenden Träger gesammelt werden, wobei das Verfahren darin besteht, auf die Oberfläche der Filamente während des Ziehvorgangs und der Vereinigung der Filamente zu Fäden eine Schlichtezusammensetzung nach Anspruch 11 aufzubringen.

13. Verfahren nach Anspruch 12, **dadurch gekennzeichnet, dass** die Fäden auf einem sich drehenden Träger in Form von Spulen gesammelt werden.

14. Verfahren nach Anspruch 12, **dadurch gekennzeichnet, dass** die mit Schlichte überzogenen Fäden, die nach Vereinigung der Filamente erhalten worden sind, von einem Organ, das gleichzeitig dazu dient, sie zu ziehen, auf eine Sammelfläche geschleudert werden, die sich quer zur Richtung der aufgeschleuderten Fäden bewegt, um eine Bahn aus miteinander vermengten endlosen Fäden zu erhalten.

15. Verfahren nach Anspruch 12, **dadurch gekennzeichnet, dass** die mit Schlichte überzogenen Fäden, die nach Vereinigung der Filamente erhalten worden sind, vor dem Sammeln von einem Organ, das gleichzeitig dazu dient, sie zu ziehen, zerschnitten werden.

16. Verfahren nach einem der Ansprüche 12 bis 15, **dadurch gekennzeichnet, dass** die Schlichtezusammensetzung nach Aufbringen dieser Zusammensetzung auf den Filamenten der Einwirkung einer Ultraviolettstrahlung oder eines Elektronenstrahls in Gegenwart von mindestens einem kationischen Photoinitiator ausgesetzt wird.

17. Verfahren nach Anspruch 16, **dadurch gekennzeichnet, dass** die gesammelten, mit Schlichte überzogenen Fäden, um ein Verbundmaterial zu erhalten, mit einem zu verstärkenden organischen Material in Berührung gebracht werden, bevor das Ganze einer Ultraviolettstrahlung oder einem Elektronenstrahl ausgesetzt wird.

18. Verbundmaterial, das mindestens ein organisches und/oder anorganisches Material und mit Schlichte überzogene Glasfäden umfasst, **dadurch gekennzeichnet, dass** es wenigstens teilweise die nach einem der Ansprüche 1 bis 10 mit Schlichte überzogenen Glasfäden enthält.

## Claims

1. Glass thread coated with a sizing composition which comprises a solution of a viscosity of less than or equal to 400 cP containing less than 5% by weight of solvent and containing at least one base system which can be polymerised and/or crosslinked under the action of ultraviolet radiation or an electron beam, the said base system comprising at least one component that has a molecular mass of less than 750 and that has at least one reactive epoxy group and comprising at least 60% by weight of one or more components that have a molecular mass of less than 750 and that have at least one reactive group selected from the following groups: epoxy, hydroxy, vinyl ether, acrylic and methacrylic.

2. Glass thread according to Claim 1, **characterised in that** it exhibits a loss on ignition of less than 3% by weight.

3. Glass thread according to either of Claims 1 and 2, **characterised in that** the base system is constituted solely by one or more components having at least one reactive epoxy and/or hydroxy and/or vinyl ether and/or acrylic and/or methacrylic group.

4. Glass thread according to any one of Claims 1 to 3, **characterised in that** the base system comprises between 0 and 40% by weight of monofunctional component(s), between 60 and 100% by weight of polyfunctional component(s) and between 0 and 60% by weight of component(s) having more than two identical reactive groups.

5. Glass thread according to any one of Claims 1 to 4, **characterised in that** the base system is constituted solely by one or more components having a molecular mass of less than 750.

6. Glass thread according to any one of Claims 1 to 5, **characterised in that** the composition also comprises at least one coupling agent in proportions of between 0 and 15% by weight.

7. Glass thread according to any one of Claims 1 to 6, **characterised in that** the composition also comprises at least one film-forming agent in proportions between 0 and 15% by weight.

8. Glass thread according to any one of Claims 1 to 7, **characterised in that** the composition also comprises at least one textile agent in proportions of between 0 and 10% by weight.

9. Glass thread according to any one of Claims 1 to 8, **characterised in that** the composition also comprises at least one cationic photo-initiator.

10. Glass thread according to Claim 9, **characterised in that** the composition also comprises at least one free radical photo-initiator.

11. Sizing composition for glass threads, which comprises a solution of a viscosity of less than or equal to 400 cP containing less than 5% by weight of solvent and containing at least one base system which can be polymerised and/or crosslinked under the action of ultraviolet radiation or an electron beam, the said base system comprising at least one component that has a molecular mass of less than 750 and that has at least one reactive epoxy group and comprising at least 60% by weight of one or more components that have a molecular mass of less than 750 and that have at least one reactive group selected from the following groups: epoxy, hydroxy, vinyl ether, acrylic and methacrylic.

12. Process for the production of sized glass threads wherein a plurality of thin streams of molten glass flowing from a plurality of orifices arranged at the base of one or more die plates are drawn in the form of one or more fans of continuous filaments, and the filaments are then gathered into one or more threads which are collected on a moving support, the said process consisting in depositing a sizing composition according to Claim 11 on the surface of the filaments in the course of the drawing operation and before the filaments are gathered into threads.

13. Process according to Claim 12, **characterised in that** the threads are collected in the form of rolls on a rotating support.

14. Process according to Claim 12, **characterised in that** the sized threads obtained after gathering the filaments are projected by a member, which is also used to draw them, towards a collecting surface moving transversely to the direction of the projected threads in order to obtain a sheet of intermingled continuous threads.

15. Process according to Claim 12, **characterised in that** the sized threads obtained after gathering the filaments are cut before collection by a member which is also used to draw them.

16. Process according to any one of Claims 12 to 15, **characterised in that** the sizing composition is subjected to the action of ultraviolet radiation or an electron beam in the presence of at least one cationic photo-initiator after the said composition has been deposited on the filaments.

17. Process according to Claim 16, **characterised in that** the collected sized threads are placed in contact with an organic material to be reinforced before subjecting the whole to ultraviolet radiation or exposing it to an electron beam in order to obtain a composite.

18. Composite comprising at least one organic and/or inorganic material and sized glass threads, **characterised in that** it comprises, at least in part, sized glass threads according to any one of Claims 1 to 10.
